(19) Europäisches Patentamt
European Patent Office
Office européen des brevets

(11) **EP 3 060 801 B1**

(12) **FASCICULE DE BREVET EUROPEEN**

(45) Date de publication et mention de la délivrance du brevet:
**09.08.2017 Bulletin 2017/32**

(21) Numéro de dépôt: **14786228.8**

(22) Date de dépôt: **22.09.2014**

(51) Int Cl.:
*F04B 1/20* [(2006.01)]     *F03C 1/06* [(2006.01)]
*F16C 19/46* [(2006.01)]     *F16C 23/08* [(2006.01)]
*F16C 33/36* [(2006.01)]

(86) Numéro de dépôt international:
**PCT/FR2014/052346**

(87) Numéro de publication internationale:
**WO 2015/059376 (30.04.2015 Gazette 2015/17)**

(54) **MACHINE HYDRAULIQUE COMPORTANT UN ROULEMENT A ROULEAUX SUPPORTE PAR UNE FORME CIRCULAIRE BOMBE**

HYDRAULISCHE MASCHINE AUFWEISEND EINE ROLLENLAGERUNG, WELCHE AUF EINER KREISFÖRMIGEN WÖLBUNG GELAGERT WIRD

HYDRAULIC MACHINE COMPRISING A ROLLER BEARING WHICH IS SUPPORTED BY A CIRCULAR CONVEX SHAPE ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2013 FR 1360380**

(43) Date de publication de la demande:
**31.08.2016 Bulletin 2016/35**

(73) Titulaire: **Technoboost**
**75116 Paris (FR)**

(72) Inventeurs:
• **BALENGHIEN, Olivier**
**F-93340 Le Raincy (FR)**
• **GROULT, Antonin**
**F-78740 Vaux sur Seine (FR)**
• **GODET, Tristan**
**F-78300 Poissy (FR)**

(74) Mandataire: **Rosenberg, Muriel Sylvie**
**Peugeot Citroën Automobiles SA**
**Propriété Industrielle - LG 081**
**18 rue des Fauvelles**
**92250 La Garenne Colombes (FR)**

(56) Documents cités:
| | |
|---|---|
| EP-A1- 0 636 804 | DE-A1- 10 360 003 |
| DE-A1-102008 061 941 | DE-A1-102010 038 651 |
| DE-A1-102010 052 101 | FR-A1- 2 282 068 |
| GB-A- 879 859 | US-A- 2 987 351 |

**EP 3 060 801 B1**

**Description**

La présente invention concerne une machine hydraulique comportant des pistons axiaux coulissant dans des cylindres, ainsi qu'un véhicule hybride équipé d'une telle machine hydraulique.

Un type de machine hydraulique à barillet connu, présenté notamment par le document US-A-5358388, comporte un arbre d'entrée motorisé qui entraîne en rotation un barillet disposant d'une succession de cylindres parallèles à l'axe répartis autour de cet arbre. Chaque cylindre reçoit un piston prenant appui axialement d'un côté appelé par convention côté avant, sur un plateau inclinable qui est fixe en rotation, par l'intermédiaire d'un roulement formant une butée axiale.

Un tour de rotation du barillet donne à chaque piston un mouvement suivant un cycle complet comprenant une course dépendant de l'angle d'inclinaison du plateau, qui est réglable par une commande d'inclinaison. On peut aller ainsi d'une cylindrée nulle avec le plateau inclinable perpendiculaire à l'arbre, à une cylindrée maximale avec la plus forte inclinaison de ce plateau.

La face arrière du barillet, opposée au plateau inclinable, est en appui sur une platine circulaire fixe fermant l'extrémité des cylindres afin d'assurer une étanchéité, qui comporte des collecteurs basse et haute pression.

L'arbre de la pompe est supporté à chaque extrémité par un roulement à rouleaux, qui reçoit des efforts radiaux importants dus aux forces internes s'appliquant sur les composants, causées par les pressions qui peuvent être élevées.

Un problème qui se pose est que les efforts appliqués sur le corps de la pompe et sur l'arbre entraînent une légère flexion de cet arbre donnant une petite inclinaison à ses extrémités, ou des légers déplacements axiaux de cet arbre. Or les roulements à rouleaux acceptent mal une légère inclinaison ainsi que des efforts axiaux, qui peuvent générer à cause de la forme cylindrique des rouleaux des contraintes importantes, et des réductions de la durée de vie.

On peut dans certains cas si la charge radiale n'est pas trop importante, utiliser des roulements à billes qui peuvent plus facilement tolérer une légère inclinaison de l'arbre, mais qui acceptent des charges radiales nettement plus faibles.

Pour une charge radiale importante, on peut aussi disposer des roulements comprenant une simple ou une double rangée de rouleaux disposant d'un profil légèrement bombé en forme de tonneaux, permettant un léger mouvement de rotule. Dans le cas d'une simple rangée de rouleaux, le roulement accepte une charge axiale et radiale réduite. Dans le cas d'une double rangée de rouleaux, il est nettement plus encombrant.

Un autre type de montage de roulement connu, présenté notamment par le document FR-B1-2708685, comporte un anneau disposé entre l'arbre et la bague intérieure du roulement à billes, présentant une forme légèrement bombée au niveau de cette bague afin de donner une petite souplesse au serrage radial de la bague intérieure. Cette souplesse permet d'absorber des légères différences de dilatation, afin de maintenir un certain niveau de serrage pour des écarts de température importants. De plus l'anneau bombé permet aussi un réglage de ce serrage.

Toutefois ce document ne présente aucune caractéristique particulière du montage du roulement, permettant de réaliser une petite inclinaison de l'arbre.

Le document DE-A-103 60 003 divulgue le préambule de la revendication 1.

Le document DE-A-10 2008 061 941 décrit un palier à rouleau.

Le document GB-A-879 859 décrit un procédé de fabrication de cages de paliers à aiguilles.

La présente invention a notamment pour but d'éviter ces inconvénients de la technique antérieure.

Elle propose à cet effet une machine hydraulique selon la revendication 1.

Un avantage de cette machine hydraulique est que de manière simple et efficace, grâce au petit mouvement sur l'arbre de la bague intérieure permis par le profil bombé, les légères flexions de l'arbre entraînant une inclinaison de ses extrémités, ou les petits déplacements axiaux de cet arbre ne sont pas transmis à cette bague qui reste alignée par rapport aux rouleaux et à la bague extérieure. On évite ainsi de transmettre des efforts liés à ces mouvements, et de mettre des contraintes élevées aux extrémités de ces rouleaux, tout en gardant un roulement compact acceptant des charges radiales élevées.

La machine hydraulique selon l'invention peut de plus comporter une ou plusieurs des caractéristiques suivantes, qui peuvent être combinées entre elles.

Avantageusement, un jeu axial minimum est prévu permettant un petit mouvement axial de la pièce comprenant la face cylindrique correspondante, par rapport à la forme circulaire comportant le profil bombé.

En particulier, le roulement à rouleaux cylindriques peut être disposé à l'arrière de cette machine.

Avantageusement le roulement supportant l'arbre d'entrée, opposé au roulement à rouleaux cylindriques, forme une rotule permettant un petit mouvement d'inclinaison de cet arbre.

En particulier, le roulement formant une rotule peut comporter une double rangée de rouleaux disposant chacun d'une forme légèrement bombée, installée dans une cage externe de forme sphérique.

L'invention a aussi pour objet un véhicule automobile hybride disposant d'une machine hydraulique utilisée pour la traction, comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :

- la figure 1 est une vue en coupe axiale d'une machine hydraulique à pistons axiaux selon l'art antérieur ;
- la figure 2 est une vue de détail en coupe axiale du roulement arrière de cette machine hydraulique ;
- la figure 3 est une vue en coupe axiale du roulement arrière pour une machine hydraulique selon l'invention ;
- la figure 4 est une vue en coupe axiale du roulement arrière suivant une première variante ; et
- la figure 5 est une vue en coupe axiale du roulement arrière suivant une deuxième variante.

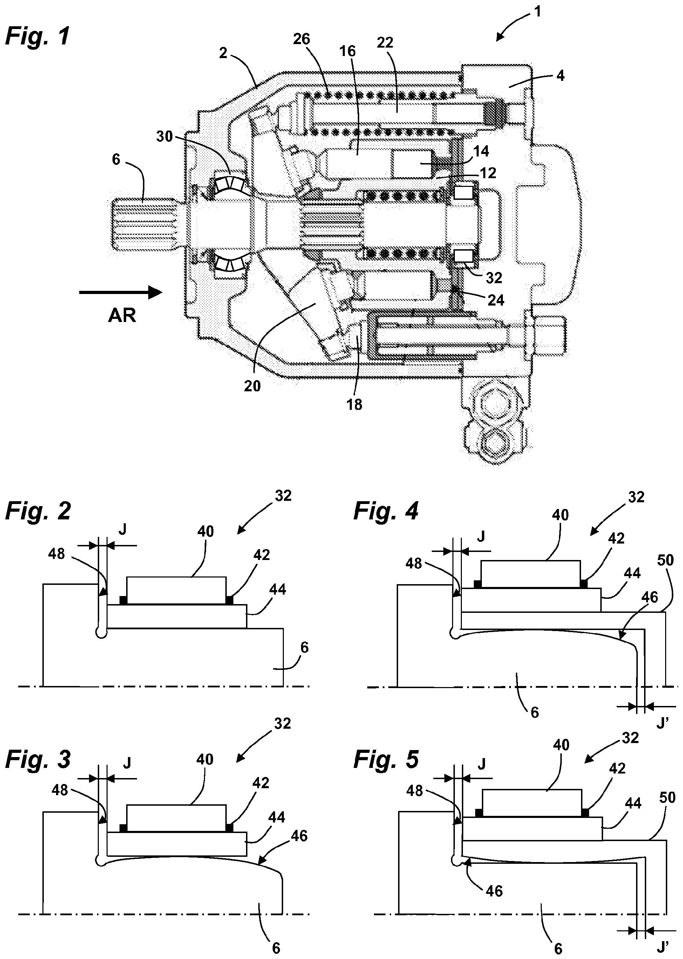

La figure 1 présente une machine hydraulique 1 pouvant tourner dans les deux sens de rotation, comprenant un corps globalement cylindrique 2 fermé axialement du côté arrière indiqué par la flèche « AR », par un couvercle 4. Le corps 2 et le couvercle 4 supportent chacun un roulement à rouleaux 30, 32 qui guide un arbre d'entrée 6 disposé suivant l'axe de ce corps.

Un barillet 12 lié en rotation à l'arbre d'entrée 6, comporte neuf cylindres 14 disposés parallèlement à l'axe, qui sont régulièrement répartis autour de cet axe.

Chaque cylindre 14 contient un piston 16 dont l'extrémité avant prend appui par une butée axiale 18 sur un plateau inclinable 20 qui peut pivoter autour d'un axe perpendiculaire à l'arbre d'entrée 6, sous l'effet d'un vérin hydraulique de commande 22 et d'un ressort de rappel 26.

La face arrière du barillet 12 prend appui sur une platine circulaire transversale 24 maintenue par le couvercle 4, pour fermer l'ouverture arrière des cylindres 14. La platine 24 comporte un collecteur basse pression et un collecteur haute pression formant chacun un arc de cercle couvrant un peu moins de la moitié des positions des cylindres 14.

Le roulement avant 30 comporte une double rangée de rouleaux disposant chacun d'une forme légèrement bombée, installée dans une cage externe de forme sphérique, afin de former une rotule permettant un petit mouvement d'inclinaison de l'arbre d'entrée 6 venant de la flexion de cet arbre subissant des forces radiales importantes dans sa partie centrale.

Dans cet exemple la machine hydraulique 1 comporte un espace suffisant pour installer à l'avant de l'arbre d'entrée 6 ce type de roulement à double rangée de rouleaux 30, qui peut supporter des charges radiale et axiale importantes. Le roulement avant à double rangée de rouleaux 30, reprend la totalité des efforts axiaux s'appliquant sur l'arbre d'entrée 6.

Par contre pour les efforts radiaux importants que doivent supporter le palier arrière de l'arbre d'entrée 6, on peut dans cet exemple pour des questions d'encombrement installer uniquement un roulement arrière 32 à simple rangée de rouleaux comportant une forme cylindrique, présenté en détail par la figure 2. Les rouleaux cylindriques 40 sont calés axialement de chaque côté sur la bague interne 44, par un jonc d'arrêt 42.

La bague interne 44 est ajustée de manière rigide sur une forme correspondante cylindrique de l'extrémité arrière de l'arbre 6, sans possibilité de mouvement angulaire, un petit jeu axial J étant prévu entre cette bague et un épaulement arrière 48 de l'arbre.

On obtient alors des contraintes élevées sur les extrémités des rouleaux cylindriques 40 dans le cas d'une flexion de l'arbre d'entrée entraînant une petite inclinaison de sa partie arrière, et des risques d'usure prématurés du roulement arrière 32.

La figure 3 présente l'extrémité arrière de l'arbre 6 comportant une forme circulaire disposant en coupe axiale d'un profil légèrement bombé tourné vers l'extérieur 46, qui est ajusté de manière légèrement glissante dans la bague interne 44 du roulement 32 restant identique. La bague externe du roulement arrière 32 est alors serrée dans le couvercle 4 de la machine hydraulique 1, afin d'obtenir un positionnement axial de ce roulement.

Les surfaces en contact forment une couronne de largeur réduite comprenant une faible adhésion, permettant des petits déplacements axiaux de glissement de la bague interne 44 qui évite de transmettre des contraintes axiales. De plus cette couronne de largeur réduite permet une légère inclinaison de l'arbre 6 sans induire de contrainte angulaire élevée sur la bague interne 44, grâce à un léger mouvement du type rotule possible entre ces deux éléments.

Le jeu axial J entre la bague interne 44 et l'épaulement arrière 48 de l'arbre, permet ces déplacements axiaux et cette inclinaison. On n'a alors pas de contrainte élevée transmise sur les rouleaux cylindriques 40 du roulement 32, qui sont protégés.

Le dimensionnement du profil bombé de l'extrémité de l'arbre 6 en contact avec la bague interne du roulement 44, peut être fait par un calcul en fonction des critères de tenue de la pression de Hertz permettant d'établir le rayon R du bombé nécessaire suivant la pression maximum admissible sur les matériaux :

$$\text{Pmax} = 0{,}59 * \sqrt{[q/R * (E1\ E2 / (E1 + E2))]}\ ;$$

avec :

Pmax : pression maximum admissible par les matériaux de la bague et de l'arbre ;

q : charge maximum par unité de longueur ;

R : rayon du bombé de l'extrémité de l'arbre ; et

E1 / E2 : les modules d'Young des matériaux respectivement de la bague et de l'arbre.

La figure 4 présente un manchon intermédiaire 50 comprenant une surface extérieure cylindrique ajustée dans la bague interne 44 du roulement, et une surface intérieure cylindrique ajustée de manière légèrement glissante sur l'extrémité de l'arbre 6 comportant une forme circulaire disposant d'un profil légèrement bombé 46, identique à celui présenté précédemment.

L'extrémité du manchon intermédiaire 50 tournée vers l'arrière, est fermée. On a de même un petit jeu axial J' entre l'extrémité arrière de l'arbre 6 et la partie transversale de fermeture du manchon 50, permettant la petite inclinaison de l'arbre dans ce manchon.

Le manchon intermédiaire 50 réalisé dans un matériau disposant d'une dureté élevée, permet d'apporter une tenue importante à la pression appliquée sur une surface réduite par le profil bombé 46, dans le cas où la surface intérieure de la bague interne 40 ne pourraient pas la supporter.

La figure 5 présente un manchon intermédiaire 50 similaire, disposant d'une surface intérieure comportant un profil bombé 46 tourné vers l'arbre 6. L'extrémité de l'arbre 6 cylindrique reçoit de manière ajustée et légèrement glissante l'appui du profil bombé 46 suivant une surface de contact formant une couronne de largeur réduite.

Pour les variantes présentées par ces deux dernières figures, la méthode de calcul du rayon bombé reste similaire.

On obtient ainsi de manière simple et efficace, sans modifier les carters de la machine hydraulique et dans un encombrement réduit, un montage du roulement 32 qui peut à la fois recevoir une charge radiale élevée, et accepter une légère inclinaison de l'arbre par rapport au carter.

On peut ainsi libérer des contraintes générales liées à l'implantation de la machine hydraulique dans son environnement, comme par exemple une fixation rigide de cette machine par ses carters, qui pourraient induire des charges radiales supplémentaires sur l'arbre générant une flexion de cet arbre.

Ce type de fixation peut permettre notamment de modifier les modes vibratoires propres de ces machines hydrauliques, pour remonter les fréquences propres afin d'améliorer les critères bruits et vibrations lors du fonctionnement.

On peut avantageusement utiliser ce type de machine pour un véhicule hybride comprenant un groupe motopropulseur disposant d'une pompe hydraulique, ou d'une machine hydraulique réversible pouvant fonctionner en pompe ou en moteur, afin de réaliser un ensemble compact.

## Revendications

**1.** Machine hydraulique comportant un barillet (12) entraîné en rotation par un arbre d'entrée (6), disposant de cylindres axiaux (14) recevant chacun un piston (16) coulissant en fonction de la rotation de l'arbre, cet arbre étant guidé dans le carter par au moins un roulement à rouleaux cylindriques (32), **caractérisée en ce que** la bague interne (44) du roulement à rouleaux (32) est reliée à l'arbre (6) par une forme circulaire comprenant en coupe axiale un profil légèrement bombé (46) portant sur une surface cylindrique correspondante, avec un ajustement de manière légèrement glissant qui permet un petit mouvement axial ou d'inclinaison de l'arbre par rapport à cette bague, **en ce que** la forme circulaire bombée (46) est réalisée sur l'arbre d'entrée (6) et **en ce que** la forme circulaire bombée (46) porte sur la surface intérieure d'un manchon intermédiaire (50) supportant la bague interne du roulement (44).

**2.** Machine hydraulique selon la revendication 1, **caractérisée en ce qu'**un jeu axial minimum (J, J') est prévu permettant un petit mouvement axial de la pièce comprenant la face cylindrique correspondante, par rapport à la forme circulaire comportant le profil bombé.

**3.** Machine hydraulique selon l'une quelconque des revendications précédentes, **caractérisée en ce que** le roulement à rouleaux cylindriques (32) est disposé à l'arrière de cette machine.

**4.** Machine hydraulique selon l'une quelconque des revendications précédentes, **caractérisée en ce que** le roulement (30) supportant l'arbre d'entrée (6), opposé au roulement à rouleaux cylindriques (32), forme une rotule permettant un petit mouvement d'inclinaison de cet arbre.

5. Machine hydraulique selon la revendication 4, **caractérisée en ce que** le roulement formant une rotule (30), comporte une double rangée de rouleaux disposant chacun d'une forme légèrement bombée, installée dans une cage externe de forme sphérique.

6. Véhicule automobile hybride disposant d'une machine hydraulique utilisée pour la traction, **caractérisé en ce que** cette machine est réalisée selon l'une quelconque des revendications précédentes.

## Patentansprüche

1. Hydraulische Maschine, umfassend eine Trommel (12), die in Drehung von einer Eingangswelle (6) angetrieben wird, die über axiale Zylinder (14) verfügt, die jeweils einen Kolben (16) aufnehmen, der in Abhängigkeit von der Drehung der Welle gleitet, wobei diese Welle in dem Gehäuse von mindestens einem Zylinderrollenlager (32) geführt wird, **dadurch gekennzeichnet, dass** der Innenring (44) des Rollenlagers (32) mit der Welle (6) durch eine Kreisform verbunden ist, umfassend im Axialschnitt ein leicht gewölbtes Profil (46), das auf einer entsprechenden zylindrischen Fläche aufliegt, mit einer leicht gleitenden Justierung, die eine kleine Axialbewegung oder Neigung der Welle in Bezug zu diesem Ring ermöglicht, dass die gewölbte Kreisform (46) auf der Eingangswelle (6) ausgeführt ist, und dass die gewölbte Kreisform (46) auf der Innenfläche einer Zwischenmuffe (50), die den Innenring des Lagers (44) trägt, aufliegt.

2. Hydraulische Maschine nach Anspruch 1, **dadurch gekennzeichnet, dass** ein minimales axiales Spiel (J, J') vorgesehen ist, das eine kleine Axialbewegung des Teils, umfassend die entsprechende zylindrische Seite, in Bezug zu der Kreisform, umfassend das gewölbte Profil, ermöglicht.

3. Hydraulische Maschine nach einem der vorhergehenden Ansprüche, **dadurch gekennzeichnet, dass** das Zylinderrollenlager (32) hinten an dieser Maschine angeordnet ist.

4. Hydraulische Maschine nach einem der vorhergehenden Ansprüche, **dadurch gekennzeichnet, dass** das Lager (30), das die Eingangswelle (6) trägt, das dem Zylinderrollenlager (32) gegenüberliegt, ein Kugelgelenk bildet, das eine kleine Neigungsbewegung dieser Welle ermöglicht.

5. Hydraulische Maschine nach Anspruch 4, **dadurch gekennzeichnet, dass** das Lager, das das Kugelgelenk (30) bildet, eine doppelte Rollenreihe umfasst, die jeweils über eine leicht gewölbte Form verfügt, die in einem Außengehäuse mit Kugelform eingebaut ist.

6. Hybridfahrzeug, umfassend eine hydraulische Maschine, die für die Traktion verwendet wird, **dadurch gekennzeichnet, dass** diese Maschine nach einem der vorhergehenden Ansprüche ausgeführt ist.

## Claims

1. A hydraulic machine comprising a barrel (12) driven in rotation by an input shaft (6), provided with axial cylinders (14) each receiving a piston (16) sliding as a function of the rotation of the shaft, this shaft being guided in the casing by at least one bearing with cylindrical rollers (32), **characterized in that** the inner ring (44) of the roller bearing (32) is connected to the shaft (6) by a circular shape having, in the axial cross-section, a slightly convex profile (46) bearing on a corresponding cylindrical surface, with a slightly sliding fit which allows a small axial or tilting movement of the shaft relative to this ring, **in that** the circular convex shape (46) is realized on the input shaft (6) and **in that** the circular convex shape (46) bears on the interior surface of an intermediate sleeve (50) supporting the inner ring of the roller bearing (44).

2. The hydraulic machine according to Claim 1, **characterized in that** a minimum axial play (J, J') is provided permitting a small axial movement of the piece including the corresponding cylindrical face, with respect to the circular shape comprising the convex profile.

3. The hydraulic machine according to any one of the preceding claims, **characterized in that** the roller bearing with cylindrical rollers (32) is disposed at the rear of this machine.

4. The hydraulic machine according to any one of the preceding claims, **characterized in that** the roller bearing (30) supporting the input shaft (6), opposite the roller bearing with cylindrical rollers (32) forms a swivel joint permitting a small tilting movement of this shaft.

5. The hydraulic machine according to Claim 4, **characterized in that** the roller bearing forming a swivel joint (30) comprises a double row of rollers, each having a slightly convex shape, installed in an external cage of spherical shape.

6. A hybrid motor vehicle having a hydraulic machine used for traction, **characterized in that** this machine is realized according to any one of the preceding claims.

**Fig. 1**

2 26 16 22 1 4

30 14 12 32 24

6 AR

20 18

**Fig. 2**

J 40 42
48 44
6

**Fig. 4**

J 40 42 50
48 44 46
6
J'

**Fig. 3**

J 40 42
48 44
46
6

**Fig. 5**

J 40 42 50
48 44
46
6
J'

EP 3 060 801 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5358388 A
- FR 2708685 B1
- DE 10360003 A
- DE 102008061941 A
- GB 879859 A